# EUROPEAN PATENT APPLICATION

(11) **EP 4 371 752 A1**
(43) Date of publication of application: **22.05.2024**
(21) Application number: 23195960.2
(22) Date of filing: 07.09.2023
(51) Int. Cl.: B29D 30/06

(54) **PRODUCTION METHOD OF A PNEUMATIC TIRE WITH A SELANT LAYER AND TIRE OBTAINED THEREBY**

(30) Priority: 15.11.2022 JP 2022182445
(71) Applicant: Toyo Tire Corporation, Itami-shi, Hyogo 664-0847 (JP)
(72) Inventor: TSUJII, Masanori, Hyogo, 664-0847 (JP)
(74) Representative: Müller-Boré & Partner Patentanwälte PartG mbB

(57) **Abstract**

A pneumatic tire and a production method thereof are provided which can improve the uniformity of a pneumatic tire equipped with a sealant layer at the tire inner surface. Provided are: a static unbalance position measuring step; a light point ascertaining step ; and a sealant layer forming step of providing a sealant layer 60 arranging in parallel in a tire-width direction a plurality of annular circling parts 62 , by coating sealant material 61, while circling along the tire-circumferential direction and while transitioning a path of circling to one direction side in the tire-width direction at least every one circling, in which the sealant layer forming step disposes a winding start 61A and a winding end 61B at a tire-circumferential direction position corresponding to the light point K, in which sealant material increasing parts 62A1, 62B1 are respectively arranged at the winding start 61A and the winding end 61B.

## Description

This application is based on and claims the benefit of priority from Japanese Patent Application No. 2022-182445, filed on 15 November 2022, the content of which is incorporated herein by reference.

### BACKGROUND OF THE INVENTION

### Field of the Invention

The present invention relates to a pneumatic tire and a production method thereof.

### Related Art

Conventionally, a pneumatic tire has been known which is equipped with a puncture prevention function whereby a hole in the tire formed during puncture is automatically plugged by a sealant layer provided to the tire inner surface. For example, Patent Document 1 discloses a pneumatic tire in which a sealant layer is formed by coating a sealant material of substantially cord-like shape in a spiral shape continuously along the tire inner surface.

Patent Document 1: Japanese Unexamined Patent Application, Publication No.2016-78817

### SUMMARY OF THE INVENTION

However, favorable uniformity is generally demanded in tires. In the case of pneumatic tires in which a sealant layer is arranged on the tire inner surface, there is a possibility of this sealant layer impacting uniformity.

The present invention has an object of providing a pneumatic tire and production method thereof which can improve the uniformity of a pneumatic tire equipped with a sealant layer on the tire inner surface.

A method of producing a pneumatic tire according to the present invention includes: a static unbalance position measuring step of measuring a static unbalance position of a tire; a light point ascertaining step of ascertaining a light point of the tire based on a static unbalance position thus measured; and a sealant layer forming step of providing a sealant layer arranging in parallel in a tire-width direction a plurality of annular circling parts of sealant material extending in a tire-circumferential direction, by coating belt-like sealant material on an inner surface of the tire, while circling along the tire-circumferential direction and while transitioning a path of circling to one direction side in the tire-width direction at least every one circling, in which the sealant layer forming step disposes each of a winding start and a winding end of the sealant material circling an inner surface of the tire at a tire-circumferential direction position corresponding to the light point, wherein sealant material increasing parts are respectively arranged at the winding start and the winding end.

A pneumatic tire according to the present invention includes: a tire having a light point; and a sealant layer provided to an inner surface of the tire, in which the sealant layer has a belt-like sealant material circling along a tire-circumferential direction on the inner surface of the tire, and a plurality of annular circling parts extending in the tire-circumferential direction arranged in parallel in the tire-width direction, by a path of circling thereof transitioning to one side in the tire-width direction at least every one turn, a circling part arranged most to one end side in the tire-width direction among the plurality of circling parts has a winding start of the sealant material, and a circling part arranged most to another end side in the tire-width direction has a winding end of the sealant material, a tire-circumferential direction position of each of the winding start and the winding end corresponds to a tire-circumferential direction position of the light point, and a sealant material increasing part is arranged at each of the winding start and the winding end.

According to the present invention, it is possible to provide a pneumatic tire and a production method thereof which can improve the uniformity of a pneumatic tire equipped with a sealant layer on the tire inner surface.

### BRIEF DESCRIPTION OF THE DRAWINGS

Fig. 1 is a side view of a tire according to an embodiment;
Fig. 2 is a tire-width direction cross-sectional view of the tire;
Fig. 3 is a flowchart showing a production method according to an embodiment;
Fig. 4 is an expanded view showing an inner surface of a tire according to an embodiment, which schematically shows a sealant layer; and
Fig. 5 is a view schematically showing an example of a method of coating a sealant material onto a tire inner surface, upon producing a tire according to the embodiment.

### DETAILED DESCRIPTION OF THE INVENTION

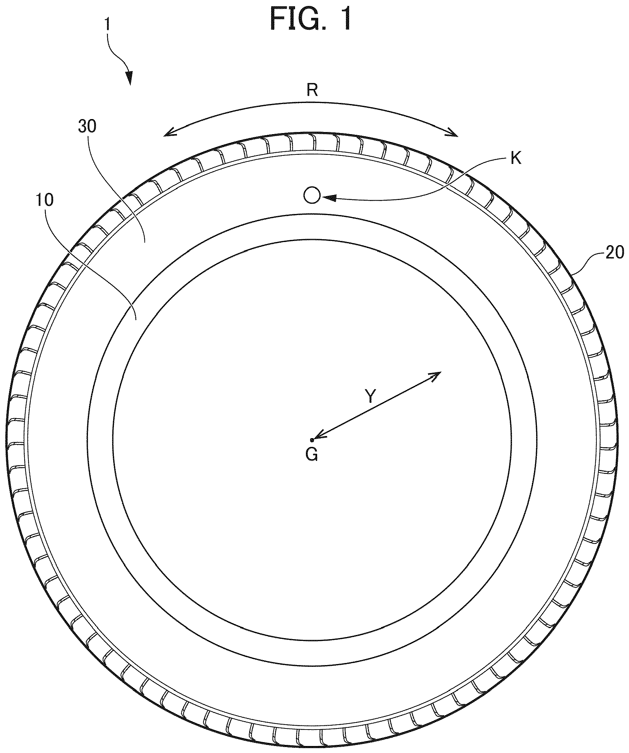

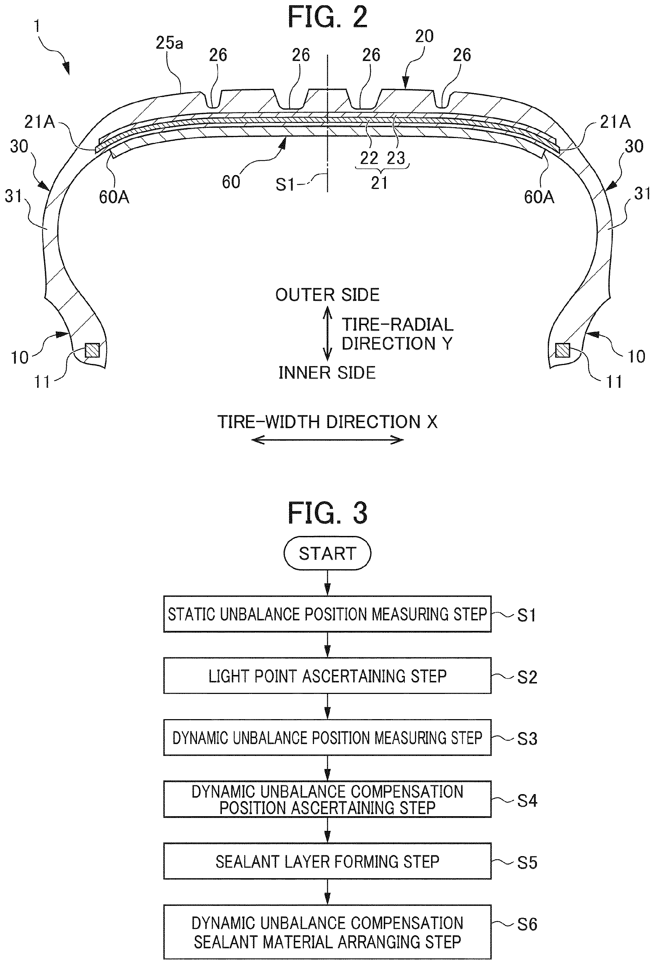

Hereinafter, an embodiment will be explained while referencing the drawings. Fig. 1 is a side view of a tire 1 produced by a production method according to the embodiment. G in Fig. 1 shows a rotational axis line, which is a center of rotation of the tire 1 extending in a paper plane front/back direction of Fig. 1. Fig. 1 shows a circumferential direction of the tire 1 by the arrow R. Fig. 2 is a view schematically showing a tire-width direction cross-sectional view of the tire 1. The tire 1 according to an example is a pneumatic tire mounted to a rim (not shown) in which the internal pressure is filled by air or the like at the inner cavity thereof. The tire 1 according to the embodiment is a tire for a passenger vehicle. It should be noted that the production method of the tire according to the embodiment is applicable to a production method of a tire for various vehicles such as light trucks, trucks and buses.

The internal structure of the tire 1 will be briefly explained by Fig. 2. Fig. 2 shows a cross section of the tire 1 having a left/right symmetrical structure in a direction extending in the rotation axis line G shown in Fig. 1. The cross-sectional view of Fig. 2 shows the state of the tire 1 in an unloaded state mounting the tire 1 to a standard rim (not shown), and filled with standard internal pressure.

In Fig. 2, the symbol S1 is the tire equatorial plane orthogonal to the rotation axis line G. Fig. 2 shows the tire-width direction and tire-radial direction as referenced in the present disclosure by arrows X and Y, respectively. Tire-width direction (arrow X direction) is a direction parallel to the rotation axis line G, and is the left/right direction in the paper plane of the cross-sectional view of Fig. 2. Tire-width direction inner side is a direction approaching the tire equatorial plane S1, and is the paper-plane central side in Fig. 2. Tire-width direction outer side is a direction distancing from the tire equatorial plane S1, and is the paper-plane left side and right side in Fig. 2. Tire-radial direction (arrow Y direction) is a direction perpendicular to the rotational axis line G, and is the paper-plane up/down direction in Fig. 2. Fig. 1 shows a tire-radial direction Y. Tire-radial direction outer side is a direction distancing from the rotation axis line G, and is the paper-plane upper side in Fig. 2. Tire-radial direction inner side is a direction approaching the rotation axis line G, and is the paper-plane lower side in Fig. 2.

The tire 1 includes a pair of beads 10 provided on both sides in the tire-width direction, tread 20 forming a contact surface with the road surface, and a pair of sidewalls 30 extending between the pair of beads 10 and the tread 20.

The pair of beads 10 constitute a tire-radial direction inside portion of the tire 1. In order to raise the rigidity of this portion, the bead 10 includes high modulus rubber. The bead 10 includes an annular bead core 11 made by covering a plurality of wound bead wires made of metal with rubber. The bead core 11 plays the role of fixing the tire 1 to the rim.

The tread 20 includes belts 21, and tread rubber 25 arranged at the outer side in the tire-radial direction of the belts 21. The tread rubber 25 has a contact surface 25a which makes contact with the road surface. A plurality of main grooves 26 extending in the circumferential direction are formed in the contact surface 25a.

The belt 21 is a member reinforcing the tread 20. The belt 21 of the embodiment is a two-layer structure including an inside belt 22, and outside belt 23 arranged on the outer side in the tire-radial direction of the inside belt 22. The inside belt 22 and outside belt 23 both have a structure in which belt cords such as a plurality of steel cords are covered with rubber. The inside belt 22 is larger in tire-width direction length than the outside belt 23. Therefore, each of the ends 21A on both sides in the tire-width direction of the belt 21 is configured by an end in the tire-width direction of the inside belt 22. It should be noted the outside belt 23 may be larger in tire-width direction length than the inside belt 22. Furthermore, the belt 21 may be a single layer structure, or may be a structure of three or more layers.

The sidewall 30 includes sidewall rubber 31 which constitutes a side wall surface on the outer side of the tire 1. The sidewall rubber 31 bends the most upon the tire 1 making a cushion action, and normally is configured by flexible rubber having fatigue resistance.

Although omitted from Fig. 2, a carcass ply constituting a ply serving as the backbone of the tire 1 is embedded inside of the tire 1. This carcass ply is embedded inside of the tire 1, in a mode passing between the pair of bead cores 11, the pair of sidewalls 30 and the tread 20. This carcass ply, for example, has a configuration in which the plurality of ply cords consisting of an insulative organic fiber cord such as polyester or polyamide, or the like are covered by rubber. The above-mentioned belt 21 is arranged on the outer side in the tire-radial direction of this carcass ply. In addition, although omitted from Fig. 2, the inner liner as the rubber layer constituting the inner wall surface of the tire 1 is provided spanning between the pair of beads, at the tire inner cavity side of the carcass ply. This inner liner is configured by air permeation resistant rubber, whereby the air inside the tire inner cavity is prevented from leaking to outside.

As shown in Fig. 2, the tire 1 according to the present embodiment further includes a sealant layer 60. The sealant layer 60 is arranged over the entire circumference in the tire-circumferential direction, in a region of the tire inner cavity surface configured by the inner liner corresponding at least to the tread 20. The length in the tire-width direction of the sealant layer 60 is larger than the contact surface 25a of the tread 20, and both ends 60A in the tire-width direction of the sealant layer 60 are preferably positioned more to the outer side in the tire-width direction than both ends in the tire-width direction of the contact surface 25a. In addition, the length in the tire-width direction of the sealant layer 60 is shorter than the length in the tire-width direction of the belt 21, and each of both ends 60A in the tire-width direction of the sealant layer 60 is preferably positioned more to the inner side in the tire-width direction than both ends 21A in the tire-width direction of the belt 21. The sealant layer 60 is formed by a belt-like sealant material being wound along the tire-circumferential direction on the tire inner surface. As the sealant material, a material having stickiness is favorably used, and is pasted to the tire inner cavity surface by the stickiness thereof. The thickness of the sealant layer 60 of at least 2 mm is said to be favorable.

A production method of a tire according to an embodiment for producing the tire 1 equipped with the above configuration will be explained below. The production method of a tire according to the embodiment relates to a method of forming the above-mentioned sealant layer 60 on the tire 1 obtained by vulcanizing a green tire, which is the source article of the tire 1 molded so as to be the above-mentioned configuration.

It should be noted that, herein, "static unbalance position", "static unbalance amount", "dynamic unbalance position" and "dynamic unbalance amount", which are requisites necessary upon implementing the production method of the tire according to the embodiment, will be explained first. Generally, in a pneumatic tire, the uniformity produced by mass unevenness of the tire is roughly divided, and can be exemplified by the three types of static unbalance, occasional unbalance and dynamic unbalance. These types of uniformity, for example, are measured in a product inspection process in the production process.

Static unbalance refers to a mass unbalance in the circumferential direction during tire non-rotation, the position of maximum weight in the circumferential direction is referred to as the static unbalance position, and the mass thereof is referred to as static unbalance amount. The static unbalance, for example, occurs due to variation in the members themselves constituting the tire, deformation of members during molding and during vulcanization of the green tire, etc. Occasional unbalance refers to the mass unbalance at the near side or far side of both sides of the tire during tire non-rotation, for example, and occurs due to eccentricity of a member during tire molding, eccentricity of the green tire or vulcanizing mold, or the like. Dynamic unbalance is the imbalance in the mass during tire rotation, produced by static unbalance and occasional unbalance being combined by rotating, and the mass thereof is referred to as dynamic unbalance amount. The dynamic unbalance position and dynamic unbalance amount are respectively measured on the front side and back side of both side surfaces of the tire.

Fig. 3 is a flowchart showing a production method according to the embodiment in process order. As shown in Fig. 3, as a production method of a tire of the embodiment, first, a static unbalance position measurement step of measuring the static unbalance is performed (Step S1). Next, based on the measured static unbalance position, a light-point ascertaining step of ascertaining the light point K of the tire 1 shown in Fig. 1 is performed (Step S2). The position of the light point of the tire 1 is the position 180° in the circumferential direction relative to the static unbalance position, and is the lightest position in the circumferential direction 180° to the opposite side relative to the heaviest static unbalance position. Therefore, at this light point K, when the weight of a predetermined mass serving as a counter relative to the static unbalance amount is arranged, static unbalance is compensated, and an improvement in the mass balance in the tire-circumferential direction is achieved. Next, a dynamic unbalance position measurement step of measuring the dynamic unbalance position of the tire 1 is performed (Step S3). Next, based on the measured dynamic unbalance position, a dynamic unbalance compensation position ascertaining step of ascertaining the position at which dynamic unbalance of the tire 1 is to be compensated is performed (Step S4). From the above, the tire-circumferential direction position which can compensate static unbalance and the position which can compensate dynamic unbalance are ascertained within the tire 1.

Next, the sealant layer 60 is formed by sealant material application on the tire inner surface (Step S5). Next, a dynamic unbalance compensation sealant material arrangement step of arranging a dynamic unbalance compensation sealant material 65 at the ascertained dynamic unbalance compensation position is performed (Step S6).

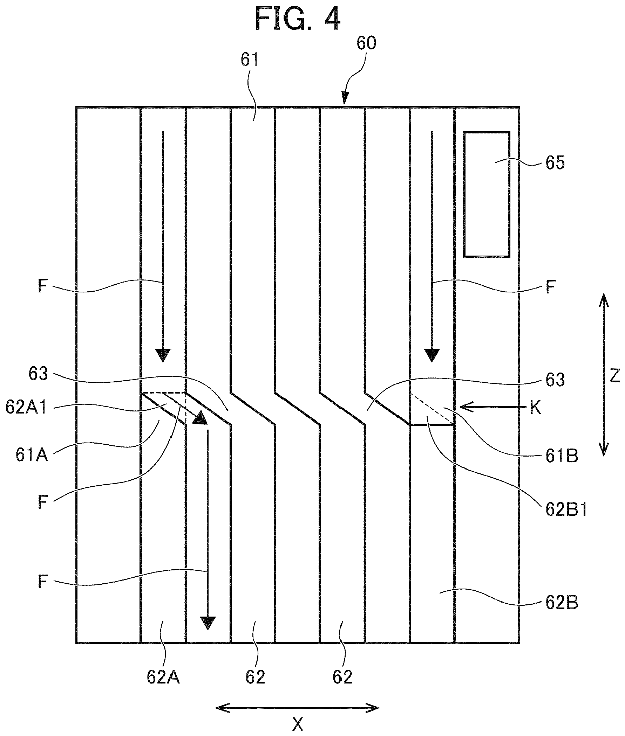

Fig. 4 is a view showing an example of a method specifically implementing Step S5, and is an exploded view showing a part in the circumferential direction of a tire inner surface to which the sealant material 61 is pasted and the sealant layer 60 is formed. Fig. 4 indicates the tire-circumferential direction by R, and indicates the tire-width direction by X. As shown in Fig. 4, the sealant layer 60 is formed by one belt-like sealant material 61 which is pasted while being wound along the tire-circumferential direction on the tire inner surface. The sealant layer 60 has a plurality of annular circling parts 62 and plurality of transition parts 63 formed by the sealant material 61.

The sealant layer 60 is formed by applying the belt-like sealant material 61 on the entire circumference of the application region in the tire-width direction of the sealant material 61 on the tire inner surface, while being wound around along the tire-circumferential direction, and while transitioning the path of this circling to a side of one direction (right direction in Fig. 4) of the tire-width direction every one turn. The annular circling parts 62 are arranged in parallel in the tire-width direction by a plurality of sealant material 61 extending in the tire-circumferential direction. It should be noted that the sealant material 61 may be pasted to the tire inner surface while transitioning to the tire-width direction every one turn; however, it may be pasted to overlap for two turns or three turns at the same location in the tire-width direction.

In Fig. 4, the reference symbol 61A indicates the winding start of the sealant material 61, and the reference symbol 61B indicates the winding end of the sealant material 61. The sealant material 61 is continuously pasted from one end side to the other end side (left side to right side in Fig. 4) in the tire-width direction, while winding around as shown by the arrow F, from the winding start 61A to the winding end 61B. The winding start 61A and winding end 61B are both set at positions where the circumferential-direction position thereof corresponds to the circumferential-direction position of the light point K. In other words, at each of the winding start 61A and winding end 61B and the light point K, the tire-circumferential direction positions are the same.

The circling part 62 is formed by the sealant material 61 being pasted on the tire inner surface in parallel with the tire-circumferential direction. The plurality of circling parts 62 are arranged in parallel so as to be adjacent in a state close to each other in the tire-width direction. The plurality of transition parts 63 slope with a predetermined angle relative to the tire-circumferential direction, and are arranged in parallel so as to be adjacent in a state close to each other.

The transition parts 63 are provided aligned at predetermined positions in the tire-circumferential direction. The transition part 63 is a portion at which the sealant material 61 transitions to one side in the tire-width direction (right side in Fig. 4), after one circling part 62 is formed by the sealant material 61 being pasted for about one turn on the tire inner surface. The next circling part 62 is pasted, through the transition part 63, to be adjacent at one side in the tire-width direction of the pasted circling part 62. The next circling part 62 adjacent on one side in the tire-width direction is repeatedly formed via the transition part 63, whereby the sealant layer 60 is formed. Upon pasting the sealant material 61 to the tire inner surface in this way, the pasting method of sequentially arranging and pasting in the tire-width direction the circling parts 62 parallel in the tire-circumferential direction while passing through the transition parts 63 may be referred to as step pasting below.

As the sealant material 61, for example, it is possible to use a sealing member having stickiness made by blending a plasticizer such as polyisobutylene and polybutene, a tackifier such as a thermoplastic olefin/diolefin copolymer, and a filler such as carbon black and silica, into unvulcanized or semi-vulcanized butyl rubber, for example. It should be noted that, not limiting thereto, the sealant material 61 may be another known sealing member that is being used conventionally. In addition, it is preferable to include a characteristic of the fluidity being low and hardly flowing even during high-speed running.

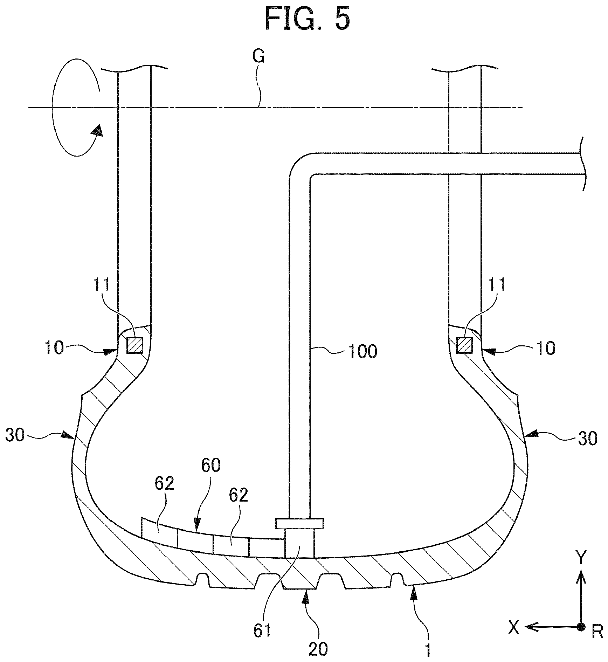

Fig. 5 is a view schematically showing an example of a method of applying the sealant material 61 to the tire inner surface in the step pasting. In Fig. 5, a width-direction cross section of the tire 1 is shown, and the tire-width direction X, tire-radial direction Y and tire-circumferential direction R are respectively shown. To step paste the sealant material 61, it is possible to perform by discharging and coating the sealant material 61 onto the inner surface of the tire 1, from the nozzle 100, while rotating the tire 1 around the axis line G, and moving the nozzle 100 in the tire-width direction, as shown in Fig. 5. The nozzle 100 is attached to the leading end of an extruder (not shown), and is inserted to the inner side of the tire 1. The sealant material 61 extruded from this extruder is discharged and coated on the inner surface of the tire 1 from the leading end of the nozzle 100.

One circling part 62 is coated by rotating the tire 1 approximately one time in a state stopping movement in the tire-width direction, while discharging the sealant material 61 continuously from the nozzle 100, and while continuously rotating the tire 1 around its axis. Next, when moving the nozzle 100 to one side in the tire-width direction by the width of the sealant material 61, the transition part 63 is coated meanwhile. Next, the movement in the tire-width direction is stopped, and the circling part 62 next to the previously coated circling part 62 is coated. By repeating the above operation, it is possible to step paste the sealant material 61 onto the formation area of the sealant layer 60. When coating and pasting the sealant material 61 to the entirety of the formation area of the sealant layer 60, discharge of sealant material 61 from the nozzle 100 stops. The sealant layer 60 is formed by the sealant material 61 in this way. Upon step pasting, it is preferable to determine the winding start 61A so that the coating amount does not vary at the left side and right side of the tire-width direction center.

It should be noted that, as shown in Fig. 5, the cross-sectional shape of the sealant material 61 discharged from the nozzle 100 and pasted on the tire inner surface is preferably a substantially rectangular shape. It is thereby possible to equalize the thickness as the sealant layer 60. In addition, the adjacent circling parts 62 are in close contact with each other in the tire-width direction, and a gap hardly occurs between the circling parts 62.

In the case of the sealant material 61 being step pasted to the tire inner surface in the above way, the initial circling part 62A on one end side in the tire-width direction (left side in Fig. 4) formed first among the plurality of circling parts 62 has a first sealant material increasing part 62A1 which overlaps in the tire-thickness direction at the transition part 63 from the initial circling part 62A to the next circling part 62, as shown in Fig. 4. In addition, the finishing circling part 62B on the other end side in the tire-width direction (right side in Fig. 4) formed last has a second sealant material increasing part 62B1 which overlaps in the tire-thickness direction with the transition part 63 transitioning to the finishing circling part 62B. The first sealant material increasing part 62A1 is a triangular portion at which the transition part 63 overlaps over the winding start 61A. The second sealant material increasing part 62B1 is a triangular portion at which the winding end 61B overlaps over the transition part 63.

As mentioned above, the winding start 61A and winding end 61B are both arranged at positions corresponding to the light point K in the tire-circumferential direction. Therefore, the first sealant material increasing part 62A1 and second sealant material increasing part 62B1 provided at this winding start 61A and winding end 61B are both arranged at positions corresponding to the light point K in the tire-circumferential direction. The first sealant material increasing part 62A1 and second sealant material increasing part 62B1 are arranged at the position of the light point K serving as a counter relative to the heaviest static unbalance position in the tire-circumferential direction. It thereby becomes possible for the non-uniform state of weight balance in the circumferential direction of the tire 1 to be compensated, to improve the uniformity relative to static unbalance.

In the dynamic unbalance compensation sealant material arranging step of Step S6, the dynamic unbalance compensation sealant material 65 is arranged at the ascertained dynamic unbalance compensation position as shown in Fig. 4. As the dynamic unbalance compensation sealant material 65, a fragment made by cutting the belt-like sealant material 61 to the required length can be used. The dynamic unbalance compensation sealant material 65 is pasted at the position approaching one side in the tire-width direction of the sealant layer 60 on the tire inner surface. By this dynamic unbalance compensation sealant material 65, it becomes possible to improve the uniformity relative to dynamic unbalance.

According to the tire 1 of the aforementioned embodiment, in the case of a nail or the like poking the tread 20, for example, and a hole that reaches the sealant layer 60 occurring, this hole is automatically plugged by the sealant layer 60, and the puncture is prevented before it happens.

According to the above embodiment, the following effects are exerted.
(1) A method of producing a pneumatic tire according to the embodiment includes: a static unbalance position measuring step of measuring a static unbalance position of a tire 1; a light point ascertaining step of ascertaining a light point K of the tire 1 based on a static unbalance position thus measured; and a sealant layer forming step of providing a sealant layer 60 arranging in parallel in a tire-width direction a plurality of annular circling parts 62 of sealant material 61 extending in a tire-circumferential direction, by coating belt-like sealant material 61 on an inner surface of the tire 1, while circling along the tire-circumferential direction and while transitioning a path of circling to one direction side in the tire-width direction at least every one circling, in which the sealant layer forming step disposes each of a winding start 61A and a winding end 61B of the sealant material 61 circling an inner surface of the tire 1 at a tire-circumferential direction position corresponding to the light point K, wherein sealant material increasing parts 62A1, 62B1 are respectively arranged at the winding start 61A and the winding end 61B.

It is thereby possible to provide a method for producing a pneumatic tire which can improve uniformity relative to static unbalance of a pneumatic tire including the sealant layer 60 on the tire inner surface.

(2) In the method of producing a pneumatic tire according to the embodiment, it is preferable for a dynamic unbalance position measuring step of measuring a dynamic unbalance position of the tire 1 to be performed together with the static unbalance position measuring step, and the method to further include: a dynamic unbalance compensation position ascertaining step of ascertaining a position at which dynamic unbalance of the tire 1 is compensated, based on the dynamic unbalance position thus measured; and a dynamic unbalance compensation sealant material arranging step of partially arranging the sealant material 61 at the dynamic unbalance compensation position thus ascertained.

It is thereby possible to provide a method for producing a pneumatic tire which can improve uniformity relative to dynamic unbalance of a pneumatic tire including the sealant layer 60 on the tire inner surface.

(3) A pneumatic tire according to the embodiment includes: a tire 1 having a light point K; and a sealant layer 60 provided to an inner surface of the tire 1, in which the sealant layer 60 has a belt-like sealant material 61 circling along a tire-circumferential direction on the inner surface of the tire 1, and a plurality of annular circling parts 62 extending in the tire-circumferential direction arranged in parallel in the tire-width direction, by a path of circling thereof transitioning to one side in the tire-width direction at least every one turn, a circling part 62 arranged most to one end side in the tire-width direction among the plurality of circling parts 62 has a winding start 61A of the sealant material 61, and a circling part 62 arranged most to another end side in the tire-width direction has a winding end 61B of the sealant material 61, a tire-circumferential direction position of each of the winding start 61A and the winding end 61B corresponds to a tire-circumferential direction position of the light point K, and a sealant material increasing part 61A1, 61B1 is arranged at each of the winding start 61A and the winding end 61B.

It is thereby possible to provide a pneumatic tire which can improve uniformity relative to static unbalance of a pneumatic tire including the sealant layer 60 on the tire inner surface.

Although an embodiment has been explained above, the present invention is not limited to the above embodiment, and even if carrying out modifications, improvements and the like in a scope that can achieve the object of the present invention, are included in the scope of the present invention.

## Claims

1. A method of producing a pneumatic tire comprising:
a static unbalance position measuring step of measuring a static unbalance position of a tire (1);
a light point ascertaining step of ascertaining a light point (K) of the tire (1) based on a static unbalance position thus measured; and
a sealant layer forming step of providing a sealant layer (60) arranging in parallel in a tire-width direction a plurality of annular circling parts (62) of sealant material (61) extending in a tire-circumferential direction, by coating belt-like sealant material (61) on an inner surface of the tire (1), while circling along the tire-circumferential direction and while transitioning a path of circling to one direction side in the tire-width direction at least every one circling,
wherein the sealant layer forming step disposes each of a winding start (61A) and a winding end (61B) of the sealant material (61) circling an inner surface of the tire (1) at a tire-circumferential direction position corresponding to the light point (K), wherein sealant material increasing parts (62A1, 62B1) are respectively arranged at the winding start (61A) and the winding end (61B).

2. The method of producing a pneumatic tire according to claim 1, wherein a dynamic unbalance position measuring step of measuring a dynamic unbalance position of the tire (1) is performed together with the static unbalance position measuring step,
the method further comprising:
a dynamic unbalance compensation position ascertaining step of ascertaining a position at which dynamic unbalance of the tire (1) is compensated, based on the dynamic unbalance position thus measured; and
a dynamic unbalance compensation sealant material arranging step of partially arranging the sealant material (61) at the dynamic unbalance compensation position thus ascertained.

3. The method of producing a pneumatic tire according to claim 1 or 2, wherein the sealant material (61) is pasted to overlap two or more turns at the same location in the tire-width direction.

4. The method of producing a pneumatic tire according to claim 1 or 2, wherein the sealant material (61) is pasted to overlap three or more turns at the same location in the tire-width direction.

5. The method of producing a pneumatic tire according to any one of claims 1 to 4, wherein a transition part (63) which is a portion at which the sealant material (61) transitions to one side in the tire-width direction, is provided after the one circling part (62) is formed by the sealant material (61) being pasted around about once on the tire inner surface, and
wherein the transition part (63) is provided to be aligned at a predetermined position in the tire-circumferential direction.

6. The method of producing a pneumatic tire according to any one of claims 1 to 5, wherein a cross-sectional shape of the sealant material (61) is substantially rectangular.

7. The method of producing a pneumatic tire according to any one of claims 1 to 6, wherein thickness of the sealant layer (60) is at least 2 mm.

8. A pneumatic tire comprising:
a tire (1) having a light point (K); and
a sealant layer (60) provided to an inner surface of the tire (1),
wherein the sealant layer (60) has a belt-like sealant material (61) circling along a tire-circumferential direction on the inner surface of the tire (1), and a plurality of annular circling parts (62) extending in the tire-circumferential direction arranged in parallel in the tire-width direction, by a path of circling thereof transitioning to one side in the tire-width direction at least every one circling,
wherein a circling part (62) arranged most to one end side in the tire-width direction among the plurality of circling parts (62) has a winding start (61A) of the sealant material (61), and a circling part (62) arranged most to another end side in the tire-width direction has a winding end (61B) of the sealant material (61),
wherein a tire-circumferential direction position of each of the winding start (61A) and the winding end (61B) corresponds to a tire-circumferential direction position of the light point (K), and
wherein a sealant material increasing part (61A1, 61B1) is arranged at each of the winding start (61A) and the winding end (61B).

9. The pneumatic tire according to claim 8, wherein a cross-sectional shape of the sealant material (61) is substantially rectangular.

10. The pneumatic tire according to claim 8 or 9, wherein thickness of the sealant layer (60) is at least 2 mm.
